(19) Europäisches Patentamt
European Patent Office
Office européen des brevets

(11) **EP 2 233 946 B1**

(12) **EUROPEAN PATENT SPECIFICATION**

(45) Date of publication and mention
of the grant of the patent:
**25.01.2012 Bulletin 2012/04**

(51) Int Cl.:
***G01S 13/95*** [(2006.01)]     ***G01S 7/41*** [(2006.01)]

(21) Application number: **10154040.9**

(22) Date of filing: **18.02.2010**

(54) **Turbulence prediction over extended ranges**

Turbulenzvorhersage über erweiterte Bereiche

Prédiction de turbulence sur des plages étendues

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.03.2009 US 163362 P**
**25.03.2009 US 163355 P**
**28.01.2010 US 695614**

(43) Date of publication of application:
**29.09.2010 Bulletin 2010/39**

(73) Proprietor: **Honeywell International Inc.**
**Morristown, NJ 07962 (US)**

(72) Inventors:
• **Kirk, James C., c/o Honeywell International Inc.**
**Morristown, NJ 07962-2245 (US)**
• **Zeng, Dongsong, c/o Honeywell International Inc.**
**Morristown, NJ 07962-2245 (US)**

(74) Representative: **Buckley, Guy Julian**
**Patent Outsourcing Limited**
**1 King Street**
**Bakewell**
**Derbyshire DE45 1DZ (GB)**

(56) References cited:
**WO-A1-00/02064**     **US-B1- 6 539 291**

• **OSTROVSKY Y P ET AL: "Use of Neural Network for Turbulence and Precipitation Classification Procedure" MATHEMATICAL METHODS IN ELECTROMAGNETIC THEORY, 2006 INTERNATIONAL CON FERENCE ON KHARKOV, UKRAINE 26-29 JUNE 2006, PISCATAWAY, NJ, USA,IEEE, PISCATAWAY, NJ, USA LNKD- DOI: 10.1109/MMET.2006.1689731, 26 June 2006 (2006-06-26), pages 161-163, XP010937116 ISBN: 978-1-4244-0490-2**
• **YAROSLAV OSTROVSKY: "Multivariate algorithms for dangerous turbulence detection in weather formations" MICROWAVES, RADAR AND REMOTE SENSING SYMPOSIUM, 2008. MRRS 2008, IEEE, PISCATAWAY, NJ, USA, 22 September 2008 (2008-09-22), pages 186-189, XP031360200 ISBN: 978-1-4244-2688-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

One danger or threat to an aircraft is from weather that includes turbulent air. Sudden updrafts, downdrafts, or wind shears can inflict injury on occupants and damage to the aircraft, or cause the total loss of aircraft and passengers. Turbulent air itself cannot be accurately measured by radar at any significant range, but such turbulence generally is accompanied by rain, hail, or particulate matter that can be. At short ranges (currently approximately up to 40 nautical miles (nm) from the aircraft), airborne Doppler radar information can give a direct reading of the movement of airborne particles and, hence, a fairly direct measure of air turbulence and potential hazard. However, current practical airborne radars that are affordable and fit on commercial aircraft do not have the ability to measure Doppler effects much farther than this, giving too little reaction time for the pilots to plan effective and efficient routes around the hazard.

**[0002]** [0002a] Ostrovsky Y P et al, in "Use of Neural Network for Turbulence and Precipitation classification Procedure", XP 010937116, 26 June 2006, International Conference on Mathematical Methods discloses a methodology of precoipitation and turbulence classification based on radar echo signal features.

**SUMMARY OF THE INVENTION**

The present invention in its various aspects is as set out in the appended claims. The present invention provides methods and systems for predicting turbulence over an extended range. An exemplary method includes decomposing radar reflectivity data into multiple adaptive three-dimensional Gaussian component functions and decomposing turbulence data into multiple adaptive three-dimensional Gaussian component functions.

The real measured turbulence data $t(x,y,z)$ is:

$$t = \sum_{k=1}^{M} A_{pk} p_k + t_{M+1}$$

The present invention provides adaptive signal decomposition and a neural network method to extend the weather radar turbulence prediction range from 40 nm to 320 nm (approximate radar limit). With the decomposed reflectivity and turbulence components as the input and output, a proposed backward propagation neural network learns the relationship between reflectivity and turbulence. The trained neural network then predicts the turbulence at an extended range where only reflectivity data are available. Advantageously, the adaptive signal decomposition method may be used for object tracking, such as, but not limited to, weather tracking, cloud tracking, bird flock tracking, aircraft tracking, *etc.*

**BRIEF DESCRIPTION OF THE DRAWING**

Preferred and alternative embodiments of the present invention are described in detail below with reference to the following drawings:

FIGURE 1 illustrates an exemplary system formed in accordance with an embodiment of the present invention;

FIGURES 2A-2D illustrate actual near-range radar reflectivity and turbulence data;

FIGURES 3 and 4 illustrate an exemplary process for training a neural network in accordance with an embodiment of the present invention;

FIGURE 5 illustrates a graphical manipulation used by the present invention for calculation improvement;

FIGURE 6 illustrates a schematic of an exemplary neural network; and

FIGURE 7 illustrates a process for determining far-range turbulence values based on the trained neural network.

**DETAILED DESCRIPTION OF ONE EMBODIMENT**

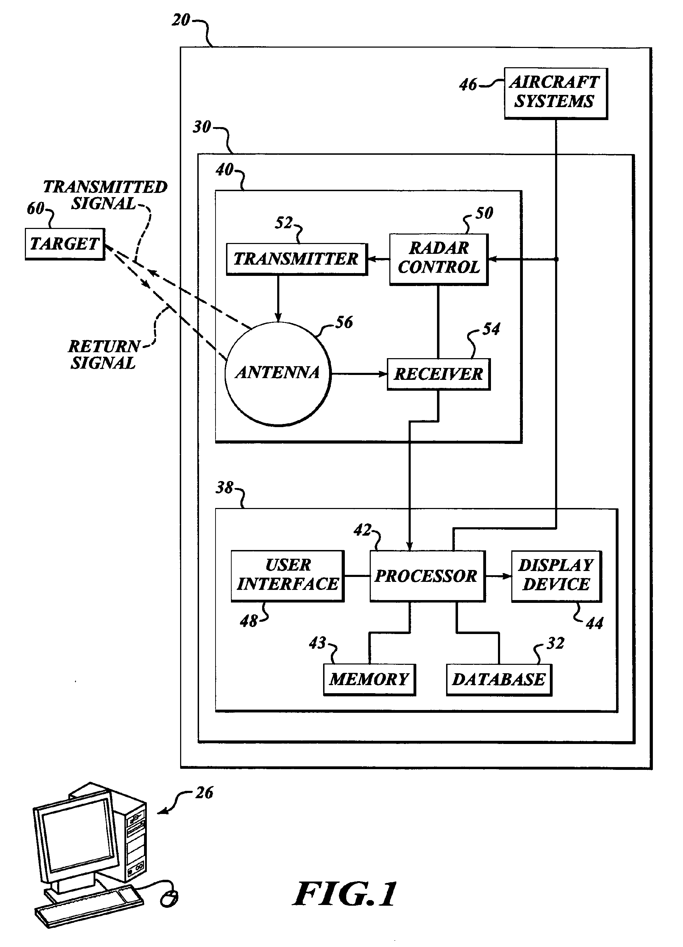

FIGURE 1 illustrates a weather display system 30 on an aircraft that provides turbulence prediction at extended ranges. The weather display system 30 provides an improved radar return. The weather display system 30 includes a weather radar system 40 and a display/interface front-end 38. The weather display system 30 receives information from other aircraft systems 46. The display/interface front-end 38 includes a processor 42, memory 43, a display device 44, a user interface 48, and a database 32. An example of the radar system 40 includes a radar controller 50 (configured to receive control instructions from the user interface 48), a transmitter 52, a receiver 54, and an antenna 56. The radar controller 50 controls the transmitter 52 and the receiver 54 for performing the sending and receiving of signals through the antenna 56. The weather radar system 40 and the display/interface front-end 38 are electronically coupled to the other aircraft systems 46.

Radar relies on a transmission of a pulse of electromagnetic energy, referred to herein as a signal. The antenna 56 narrowly focuses the transmission of the signal pulse. Like the light from a flashlight, this narrow signal illuminates any objects in its path and illuminated objects reflect the electromagnetic energy back to the antenna.

Reflectivity data correspond to that portion of a radar's signal reflected back to the radar by liquids (e.g., rain) and/or frozen droplets (e.g., hail, sleet, and/or snow) residing in a weather object, such as a cloud or storm, or residing in areas proximate to the cloud or storm generating the liquids and/or frozen droplets.

The radar controller 50 calculates the distance of the weather object relative to the antenna 56 based upon the length of time the transmitted signal pulse takes in the transition from the antenna 56 to the object and back to the antenna 56. The relationship between distance and time is linear as the velocity of the signal is constant, approximately the speed of light in a vacuum. Honeywell's® RDR-4000 airborne weather radar is an example weather radar that provides the radar reflectivity data and the short range Doppler radar information.

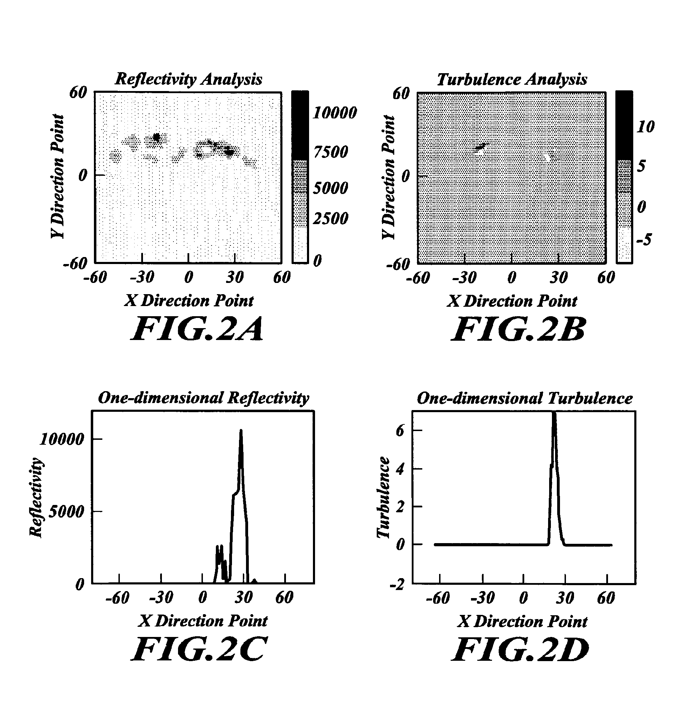

FIGURES 2A-D show actual radar reflectivity and turbulence data. Although both reflectivity and turbulence data are three-dimensional, for visualization reasons, the data is presented in only one and two dimensions. FIGURES 2A and B show two-dimensional reflectivity and turbulence, respectively. FIGURES 2C and D show one-dimensional reflectivity and turbulence, respectively. From FIGURE 2C and D, it is observed that the reflectivity and turbulence data are all positive and look like the sum of multiple Gaussian functions.

In one embodiment, the present invention includes turbulence prediction systems and methods using adaptive signal decomposition and a neural network's approach to forecast turbulence information beyond the 40 nm range. An exemplary method includes reflectivity signal decomposition and turbulence signal decomposition. The method decomposes the reflectivity data into multiple adaptive, three-dimensional Gaussian component functions, whose parameters, such as center position, amplitude, and dimensional standard deviations, are determined adaptively to maximally match the measured reflectivity. Performing the reflectivity signal decomposition includes using adaptive three-dimensional Gaussian base functions with unit energy. The turbulence data are decomposed into adaptive three-dimensional Gaussian base functions, with their parameters adjusted to maximally match the measured turbulence data.

With the decomposed reflectivity and turbulence components as input and output, backward propagation of the neural network is performed for learning the relationship between reflectivity and turbulence. The trained neural network is then used to predict the turbulence at an extended range where only reflectivity data are available. The adaptive signal decomposition method proposed herein may also be used for object tracking, e.g., weather/cloud tracking, bird flock tracking, aircraft tracking, etc.

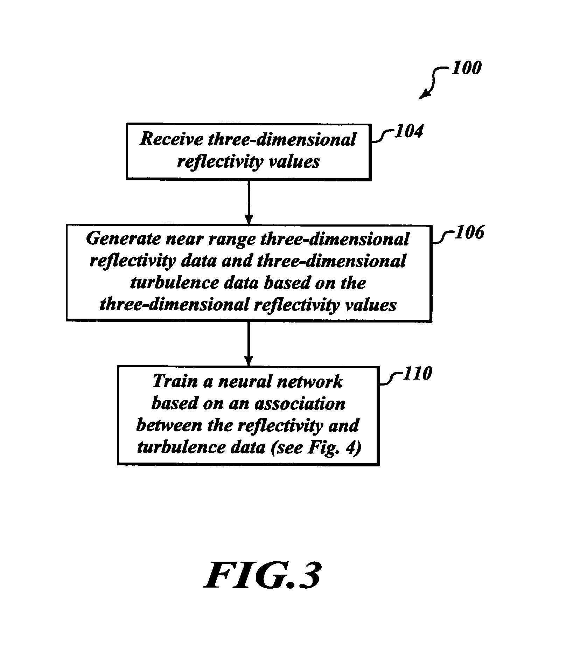

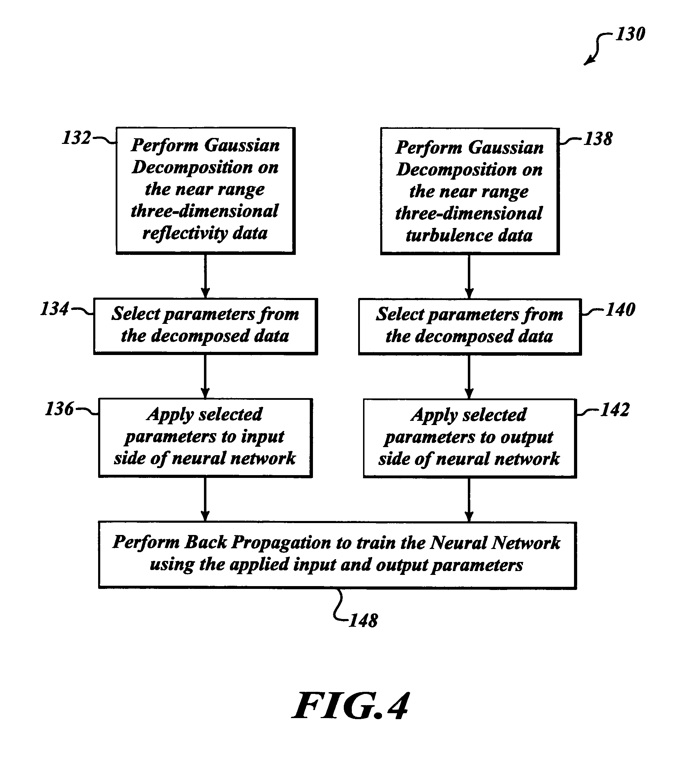

FIGURE 3 illustrates an exemplary process 100 that performs training of a neural network using reflectivity and turbulence values in accordance with an embodiment of the present invention. First, at a block 104, three-dimensional reflectivity values are received from a radar system. Next, at a block 106, near-range three-dimensional reflectivity data and three-dimensional turbulence data based on the three-dimensional reflectivity values are generated. Next, at a block 110, the process 100 trains a neural network based on an association between the generated three-dimensional reflectivity data and the three-dimensional turbulence data. The training step is described in more detail below with regard to FIGURE 4.

FIGURE 4 illustrates a process 130 that describes the training of the neural network in more detail. At a block 132, a Gaussian decomposition of the near-range three-dimensional reflectivity data is performed. Next, at a block 134, parameters from the decomposed reflectivity data are selected. Then, at a block 136, the selected parameters are applied to an input side of a neural network that needs to be trained. Concurrent with blocks 132-136, a Gaussian decomposition is performed on the near-range three-dimensional turbulence data. Next, at a block 140, parameters are selected from the decomposed turbulence data. At a block 142, the selected turbulence data parameters are applied to an output side of the untrained neural network. Finally, at a block 148, backward propagation of the untrained neural network is performed, using the applied input and output parameters, thereby training the neural network.

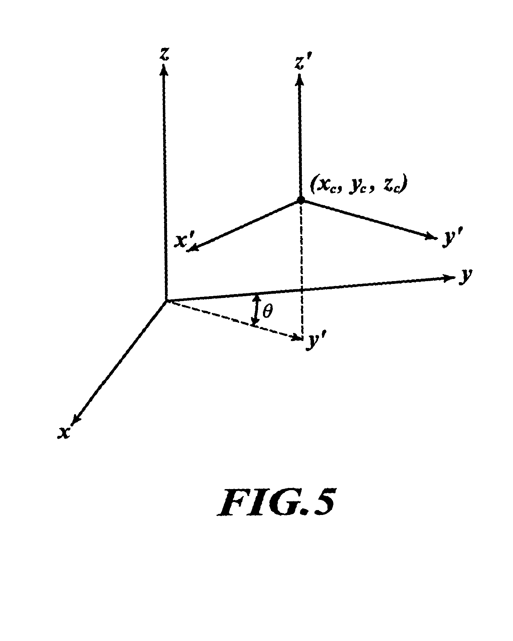

FIGURE 5 shows that, for the convenience of computation, a coordinate change may be necessary and includes moving the origin of the $xyz$ coordinates to point $(x_c, y_c, z_c)$ and clockwise rotating the $y$ coordinate $\theta$ results in new $x'y'z'$ coordinates.

The new coordinates after coordinate change are calculated as:

$$\begin{cases} x' = (x - x_c)\cos\theta - (y - y_c)\sin\theta \\ y' = (x - x_c)\sin\theta + (y - y_c)\cos\theta \\ z' = z - z_c \end{cases} \tag{1}$$

The rotation angle $\theta$ is calculated as:

$$\theta = \arctan\left(\frac{x_c'}{y_c'}\right) \tag{2}$$

The transform from new coordinates back to old coordinates is:

$$\begin{cases} x = x'\cos\theta + y'\sin\theta + x_c \\ y = -x'\sin\theta + y'\cos\theta + y_c \\ z = z' + z_c \end{cases} \tag{3}$$

**Adaptive Decomposition of Reflectivity**: The following equations show the adaptive decomposition of reflectivity. The three-dimensional Gaussian base function is proposed, as follows:

$$f(x',y',z') = \frac{1}{(2\pi)^{3/4}\sqrt{\sigma_x\sigma_y\sigma_z}}\exp\left(-\frac{x'^2}{4\sigma_x^2} - \frac{y'^2}{4\sigma_y^2} - \frac{z'^2}{4\sigma_z^2}\right), \tag{4}$$

which has unit energy, i.e., $\int |f|^2(x',y',z')dx'dy'dz' = 1$. Placing equation (1) into equation (4), the three-dimensional Gaussian base function in *xyz* coordinates is:

$$f(x,y,z) = \frac{1}{(2\pi)^{3/4}\sqrt{\sigma_x\sigma_y\sigma_z}}\exp\left(-\frac{[(x-x_c)\cos\theta - (y-y_c)\sin\theta]^2}{4\sigma_x^2} - \frac{[(x-x_c)\sin\theta + (y-y_c)\cos\theta]^2}{4\sigma_y^2} - \frac{(z-z_c)^2}{4\sigma_z^2}\right)$$

$$\tag{5}$$

At initialization, the current reflectivity $r_1$ is set to the measured reflectivity data $r(x,y,z)$, i.e.,

$$r_1 = r(x,y,z) \tag{6}$$

The center position and dimensional deviations of the three-dimensional Gaussian base function are determined by solving the following optimization problem, where $\langle,\rangle$ means inner product.

$$\max_{f_1}|\langle r_1, f_1 \rangle|^2 \tag{7}$$

The amplitude of the Gaussian base function is calculated as:

$$A_{f1} = \langle r_1, f_1 \rangle \tag{8}$$

The first reflectivity component function $v_1$ is therefore:

$$v_1 = A_{f1}f_1 \tag{9}$$

Removing the first component function $v_1$ from the original reflectivity data $r_1$, a new reflectivity $r_2$ data is attained, i.e.,

$$r_2 = r_1 - A_{f1}f_1$$

$$(10)$$

Repeating the above procedure for $N$ iterations, there become $N$ reflectivity component functions:

$$v_{kcom} \sim (A_{fk}, x_{cfk}, y_{cfk}, z_{cfk}, \sigma_{xfk}, \sigma_{yfk}, \sigma_{zfk}) \text{ for } k = 1, \cdots, N$$

$$(11)$$

The real measured data $r(x,y,z)$ is:

$$r = \sum_{k=1}^{N} A_{fk}f_k + r_{N+1}$$

$$(12)$$

It is interesting to note that the residual of the adaptive decomposition is always bounded. For continuous signal $r$, the residual will be reduced to zero as the number of iterations $N$ goes to infinity.

Ignoring the residual $r_{N+1}$, the $N$ component functions are used to approximate the reflectivity function as:

$$\hat{r} = \sum_{k=1}^{N} A_{fk}f_k$$

$$(13)$$

**Adaptive Decomposition of Turbulence**: The following equations show the adaptive decomposition of turbulence. The turbulence base function is proposed, as follows:

$$p(x',y',z') = \frac{y'}{(2\pi)^{3/4}\sigma_y\sqrt{\sigma_x\sigma_y\sigma_z}} \exp\left(-\frac{x'^2}{4\sigma_x^2} - \frac{y'^2}{4\sigma_y^2} - \frac{z'^2}{4\sigma_z^2}\right)$$

$$(14)$$

This turbulence base function also has unit energy, i.e., $\int\int\int p^2(x',y',z')dx'dy'dz'=1$. Placing equation (1) into equation (14), the turbulence base function in $xyz$ coordinates is represented as:

$$p(x,y,z)=\frac{(x-x_c)\sin\theta+(y-y_c)\cos\theta}{(2\pi)^{3/4}\sigma_y\sqrt{\sigma_x\sigma_y\sigma_z}}\exp\left(-\frac{[(x-x_c)\cos\theta-(y-y_c)\sin\theta]^2}{4\sigma_x^2}-\frac{[(x-x_c)\sin\theta+(y-y_c)\cos\theta]^2}{4\sigma_y^2}-\frac{(z-z_c)^2}{4\sigma_z^2}\right)$$

$$(15)$$

At initialization, the measured turbulence data $t(x,y,z)$ are assigned to the current turbulence $t_1$, i.e.,

$$t_1=t(x,y,z)$$

$$(16)$$

The parameters of the turbulence base function are determined by solving the following optimization problem.

$$\max_{p_1}\left|\langle t_1,p_1\rangle\right|^2$$

$$(17)$$

The amplitude of the turbulence base function is calculated as:

$$A_{p1}=\langle t_1,p_1\rangle$$

$$(18)$$

The first turbulence component function $u_0$ is:

$$u_1=A_{p1}p_1$$

$$(19)$$

Removing the first component function $u_1$ from the original turbulence data $t_1$, a new turbulence data $t_2$ is attained, i.e.,

$$t_2=t_1-A_{p1}p_1$$

$$(20)$$

Repeating the above procedure for $M$ iterations, $M$ component functions are:

$$p_{kcom} \sim (A_{pk}, x_{cpk}, y_{cpk}, z_{cpk}, \sigma_{xpk}, \sigma_{ypk}, \sigma_{zpk}) \text{ for } k = 1, \cdots, M$$

$$(21)$$

Ignoring the residual $t_{M+1}$, the $M$ component functions are used to reconstruct the turbulence function as:

$$\hat{t} = \sum_{k=1}^{M} A_{pk} p_k$$

$$(22)$$

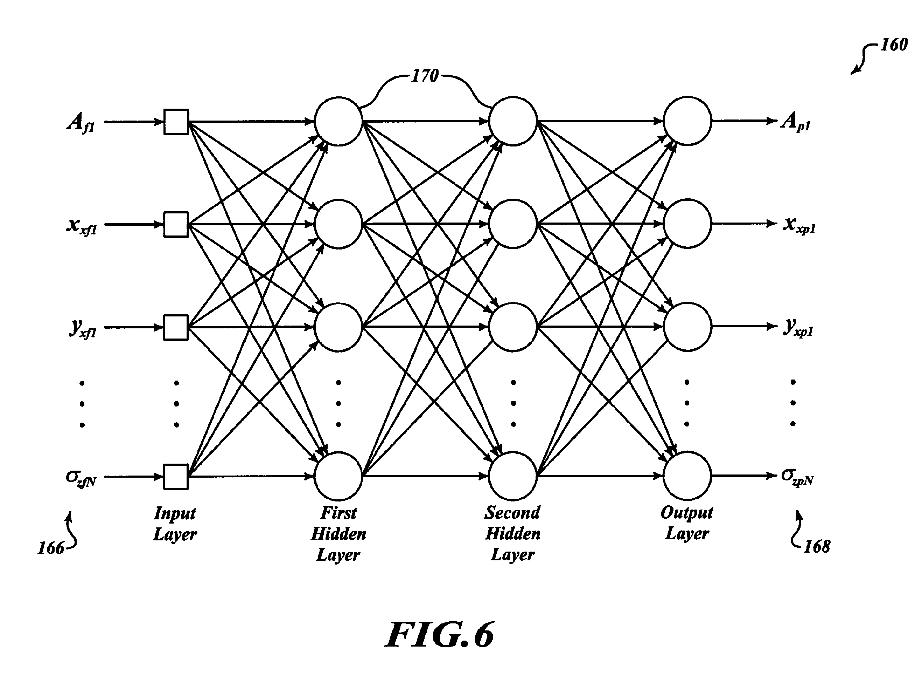

FIGURE 6 shows a three-layer backward propagation neural network 160 having inputs 166, outputs 168, and nodes 170. Other back propagation neural network architectures may be used.

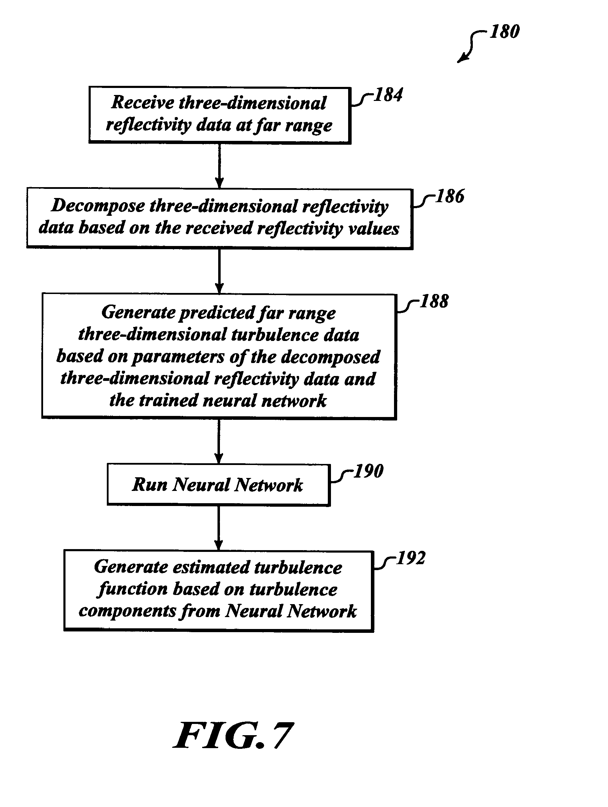

Beyond ~40 nm, the weather radar can effectively measure only reflectivity. The measured reflectivity data is decomposed into reflectivity components (FIGURE 7, blocks 184, 186). Then, at a block 188, decomposed reflectivity components (parameters) are applied as the input 166 to the trained neural network 160. The neural network 160 is then executed, thus producing predicted turbulence components (block 190, output 168). At a block 192, the produced predicted turbulence components are reconstructed into an estimated turbulence function. This estimated turbulence function will be the predicted turbulence for the ranges greater than 40 nm, where turbulence storage cells are otherwise left empty, due to low weather radar resolution.

Processors are used to automatically perform the steps shown and described in the flowcharts above.

## Claims

1. A method for predicting turbulence at ranges greater than 40 nautical miles (nm) using at least one processing device (42, 26) the method comprising:

> receiving radar reflectivity and turbulence data at ranges less than 40 nm;
> training a neural network using the received radar reflectivity and turbulence data as input and output respectively;
> receiving radar reflectivity data at ranges greater than 40 nm; and
> predicting turbulence data based on the received radar reflectivity data at ranges greater than 40 nm and the trained neural network
> wherein training the neural network comprises:

>> decomposing the received radar reflectivity data into multiple adaptive, three-dimensional Gaussian component functions; and
>> decomposing the received turbulence data into multiple adaptive, three-dimensional Gaussian component functions
>> selecting one or more first parameters from the multiple adaptive, three-dimensional Gaussian component functions of the decomposed reflectivity data;
>> selecting one or more second parameters from the multiple adaptive, three-dimensional Gaussian component functions of the decomposed turbulence data;
>> applying the one or more first parameters to the input side of the neural network; and
>> applying the one or more second parameters to the output side of the neural network.

2. The method of Claim 1, wherein the parameters comprise one or more of a center position, an amplitude, and a dimensional standard deviation.

3. The method of Claim 1, wherein training the neural network is performed at a processing device remotely located from the processing device performing receiving radar reflectivity and turbulence data and predicting turbulence data.

4. The method of Claim 3, further comprising distributing the parameters to aircraft other than the aircraft with the processing device that received the radar reflectivity and turbulence data.

5. A turbulence prediction system at least partially located on an aircraft, the system comprising:

a radar system (40) configured to generate radar reflectivity data at ranges greater than 40 nautical miles (nm); and
a processing device (42) in signal communication with the radar system, the processing device configured to predict turbulence data based on the received radar reflectivity data and a neural network previously trained using radar reflectivity and turbulence data at ranges less than 40 nm as input and output to the neural network respectively;
wherein the radar system and the processing device are located on an aircraft,
further comprising a second processing device (26) configured to train the neural network, the second processing device being configured to:
decompose the less than 40 nm radar reflectivity data into multiple adaptive, three-dimensional Gaussian component functions; and
decompose the turbulence data into multiple adaptive, three-dimensional Gaussian component functions,
select one or more first parameters from the multiple adaptive, three-dimensional Gaussian component functions of the decomposed reflective data;
select one or more second parameters from the multiple adaptive, three-dimensional Gaussian component functions of the decomposed reflective data;
apply the one or more first parameters the input side of the neural network; and
apply the one or more second parameters to the output side of the neural network.

6. The system of Claim 5, wherein the parameters comprise one or more of a center position, an amplitude, and a dimensional standard deviation.

7. The system of Claim 5, wherein the first and second processing devices are the same device and the processing of both processing devices is performed in real time.

8. The system of Claim 5, wherein the second processing device is remotely located from the aircraft.


**Patentansprüche**

1. Verfahren zum Vorhersagen von Turbulenz in Entfernungen von mehr als 40 nautischen Meilen (nm) unter Verwendung mindestens einer Verarbeitungseinrichtung (42, 26), wobei das Verfahren die folgenden Schritte umfasst:

Empfangen von Radarreflektivitäts- und Turbulenzdaten in Entfernungen von weniger als 40 nm;
Trainieren eines neuronalen Netzwerks unter Verwendung der empfangenen Radarreflektivitäts-und Turbulenzdaten als Eingabe bzw. Ausgabe;
Empfangen von Radarreflektivitätsdaten in Entfernungen von mehr als 40 nm; und
Vorhersagen von Turbulenzdaten auf der Basis der empfangenen Radarreflektivitätsdaten in Entfernungen von mehr als 40 nm und des trainierten neuronalen Netzwerks,
wobei das Trainieren des neuronalen Netzwerks Folgendes umfasst:

Zerlegen der empfangenen Radarreflektivitätsdaten in mehrere adaptive dreidimensionale Gaußsche Komponentenfunktionen;
Zerlegen der empfangenen Turbulenzdaten in mehrere adaptive dreidimensionale Gaußsche Komponentenfunktionen,
Auswählen eines oder mehrerer erster Parameter aus den mehreren adaptiven dreidimensionalen Gaußschen Komponentenfunktionen der zerlegten Reflektivitätsdaten;
Auswählen eines oder mehrerer zweiter Parameter aus den mehreren adaptiven dreidimensionalen Gaußschen Komponentenfunktionen der zerlegten Turbulenzdaten;
Anwenden des einen oder der mehreren ersten Parameter auf die Eingangsseite des neuronalen Netzwerks; und

Anwenden des einen oder der mehreren zweiten Parameter auf die Ausgangsseite des neuronalen Netzwerks.

2. Verfahren nach Anspruch 1, wobei die Parameter eine oder mehrere der folgenden Alternativen umfassen:

eine Mittenposition, eine Amplitude und eine dimensionale Standardabweichung.

3. Verfahren nach Anspruch 1, wobei das Trainieren des neuronalen Netzwerks in einer Verarbeitungseinrichtung durchgeführt wird, die von der Verarbeitungseinrichtung entfernt angeordnet ist, die das Empfangen von Radarreflektivitäts- und Turbulenzdaten und das Vorhersagen von Turbulenzdaten durchführt.

4. Verfahren nach Anspruch 3, ferner mit dem Schritt des Verteilens der Parameter an Flugzeuge außer dem Flugzeug mit der Verarbeitungseinrichtung, die die Radarreflektivitäts- und Turbulenzdaten empfangen hat.

5. Turbulenzvorhersagesystem, das sich mindestens teilweise in einem Flugzeug befindet, wobei das System Folgendes umfasst:

ein Radarsystem (40), das dafür ausgelegt ist,
Radarreflektivitätsdaten in Entfernungen von mehr als 40 nautischen Meilen (nm) zu erzeugen; und
eine Verarbeitungseinrichtung (42) in Signalkommunikation mit dem Radarsystem, wobei die Verarbeitungseinrichtung dafür ausgelegt ist,
Turbulenzdaten auf der Basis der empfangenen Radarreflektivitätsdaten und eines neuronalen Netzwerks vorherzusagen, das unter Verwendung von Radarreflektivitäts- und Turbulenzdaten in Entfernungen von weniger als 40 nm als Eingabe bzw. Ausgabe für das neuronale Netzwerk zuvor trainiert wurde;
wobei das Radarsystem und die Verarbeitungseinrichtung in einem Flugzeug angeordnet sind,
ferner umfassend eine zweite Verarbeitungseinrichtung (26), die dafür ausgelegt ist, das neuronale Netzwerk zu trainieren, wobei die zweite Verarbeitungseinrichtung für Folgendes ausgelegt ist:

Zerlegen der weniger-als-40-nm-Radarreflektivitätsdaten in mehrere adaptive dreidimensionale Gaußsche Komponentenfunktionen;
Zerlegen der Turbulenzdaten in mehrere adaptive dreidimensionale Gaußsche Komponentenfunktionen,
Auswählen eines oder mehrerer erster Parameter aus den mehreren adaptiven dreidimensionalen Gaußschen Komponentenfunktionen der zerlegten Reflektivitätsdaten;
Auswählen eines oder mehrerer zweiter Parameter aus den mehreren adaptiven dreidimensionalen Gaußschen Komponentenfunktionen der zerlegten Turbulenzdaten;
Anwenden des einen oder der mehreren ersten Parameter auf die Eingangsseite des neuronalen Netzwerks; und
Anwenden des einen oder der mehreren zweiten Parameter auf die Ausgangsseite des neuronalen Netzwerks.

6. System nach Anspruch 5, wobei die Parameter eine oder mehrere der folgenden Alternativen umfassen: eine Mittenposition, eine Amplitude und eine dimensionale Standardabweichung.

7. System nach Anspruch 5, wobei die erste und zweite Verarbeitungseinrichtung dieselbe Einrichtung sind und die Verarbeitung beider Verarbeitungseinrichtungen in Echtzeit durchgeführt wird.

8. System nach Anspruch 5, wobei die zweite Verarbeitungseinrichtung von dem Flugzeug entfernt angeordnet ist.


**Revendications**

1. Procédé de prédiction de turbulence à des distances supérieures à 40 milles marins (nm) utilisant au moins un dispositif de traitement (42, 26), le procédé comprenant les étapes consistant à :

recevoir des données de réflectivité radar et de turbulence à des distances inférieures à 40 nm ;
entraîner un réseau neuronal en utilisant respectivement comme entrée et sortie les données de réflectivité radar et de turbulence ;
recevoir des données de réflectivité radar à des distances supérieures à 40 nm ; et

prédire des données de turbulence en fonction des données de réflectivité radar reçues à des distances supérieures à 40 nm et du réseau neuronal entraîné,

l'étape consistant à entraîner le réseau neuronal comprenant les étapes consistant à :

décomposer les données de réflectivité radar reçues en une pluralité de fonctions composantes gaussiennes tridimensionnelles adaptatives ;

décomposer les données de turbulence reçues en une pluralité de fonctions composantes gaussiennes tridimensionnelles adaptatives ;

sélectionner un ou plusieurs premiers paramètres dans la pluralité de fonctions composantes gaussiennes tridimensionnelles adaptatives des données de réflectivité décomposées ;

sélectionner un ou plusieurs deuxièmes paramètres dans la pluralité de fonctions composantes gaussiennes tridimensionnelles adaptatives des données de turbulence décomposées ;

appliquer le ou les premiers paramètres au côté entrée du réseau neuronal ; et

appliquer le ou les deuxièmes paramètres au côté sortie du réseau neuronal.

2. Procédé selon la revendication 1, les paramètres comprenant au moins un des paramètres suivants : une position centrale, une amplitude et un écart type dimensionnel.

3. Procédé selon la revendication 1, l'étape consistant à entraîner le réseau neuronal étant exécutée au niveau d'un dispositif de traitement situé à distance du dispositif de traitement exécutant les étapes consistant à recevoir des données de réflectivité radar et de turbulence et à prédire des données de turbulence.

4. Procédé selon la revendication 3, comprenant en outre l'étape consistant à diffuser les paramètres à des aéronefs autres que l'aéronef équipé du dispositif de traitement qui a reçu les données de réflectivité radar et de turbulence.

5. Système de prédiction de turbulence situé au moins en partie sur un aéronef, le système comprenant :

un système radar (40) conçu pour générer des données de réflectivité radar à des distances supérieures à 40 milles marins (nm) ; et

un dispositif de traitement (42) en communication par signaux avec le système radar, le dispositif de traitement étant conçu pour prédire des données de turbulence en fonction des données de réflectivité radar reçues et d'un réseau neuronal préalablement entraîné en utilisant respectivement comme entrée et sortie des données de réflectivité radar et de turbulence à des distances inférieures à 40 nm ;

le système radar et le dispositif de traitement étant situés sur un aéronef,

le système comprenant en outre un deuxième dispositif de traitement (26) conçu pour entraîner le réseau neuronal, le deuxième dispositif de traitement étant conçu pour :

décomposer les données de réflectivité radar à moins de 40 nm en une pluralité de fonctions composantes gaussiennes tridimensionnelles adaptatives ;

décomposer les données de turbulence en une pluralité de fonctions composantes gaussiennes tridimensionnelles adaptatives ;

sélectionner un ou plusieurs premiers paramètres dans la pluralité de fonctions composantes gaussiennes tridimensionnelles adaptatives des données de réflectivité décomposées ;

sélectionner un ou plusieurs deuxièmes paramètres dans la pluralité de fonctions composantes gaussiennes tridimensionnelles adaptatives des données de turbulence décomposées ;

appliquer le ou les premiers paramètres au côté entrée du réseau neuronal ; et

appliquer le ou les deuxièmes paramètres au côté sortie du réseau neuronal.

6. Système selon la revendication 5, les paramètres comprenant au moins un des paramètres suivants : une position centrale, une amplitude et un écart type dimensionnel.

7. Système selon la revendication 5, les premier et deuxième dispositifs de traitement étant un même dispositif et le traitement par les deux dispositifs de traitement étant exécuté en temps réel.

8. Système selon la revendication 5, le deuxième dispositif de traitement étant situé à distance de l'aéronef.

**FIG.1**

**Reflectivity Analysis**

**FIG.2A**

**Turbulence Analysis**

**FIG.2B**

**One-dimensional Reflectivity**

**FIG.2C**

**One-dimensional Turbulence**

**FIG.2D**

*100*

Receive three-dimensional
reflectivity values *104*

Generate near range three-dimensional
reflectivity data and three-dimensional
turbulence data based on the
three-dimensional reflectivity values *106*

Train a neural network
based on an association
between the reflectivity and
turbulence data (see Fig. 4) *110*

# FIG.3

*130

132 — | Perform Gaussian Decomposition on the near range three-dimensional reflectivity data |

138 — | Perform Gaussian Decomposition on the near range three-dimensional turbulence data |

134 — | Select parameters from the decomposed data |

140 — | Select parameters from the decomposed data |

136 — | Apply selected parameters to input side of neural network |

142 — | Apply selected parameters to output side of neural network |

Perform Back Propagation to train the Neural Network using the applied input and output parameters

148

*FIG.4*

**FIG.5**

160

$A_{f1}$ — Input Layer — First Hidden Layer — Second Hidden Layer — Output Layer — $A_{p1}$

$x_{xf1}$ — $x_{xp1}$

$y_{xf1}$ — $y_{xp1}$

$\sigma_{zfN}$ — $\sigma_{zpN}$

166

168

170

**FIG.6**

*180

Receive three-dimensional
reflectivity data at far range *184

↓

Decompose three-dimensional reflectivity
data based on the received reflectivity values *186

↓

Generate predicted far range
three-dimensional turbulence data
based on parameters of the decomposed
three-dimensional reflectivity data and
the trained neural network *188

↓

Run Neural Network *190

↓

Generate estimated turbulence
function based on turbulence
components from Neural Network *192

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Ostrovsky Y P et al.** *Use of Neural Network for Turbulence and Precipitation classification Procedure,* 26 June 2006